# EUROPÄISCHE PATENTSCHRIFT

(11) **EP 1 326 490 B1**
(45) Veröffentlichungstag und Bekanntmachung des Hinweises auf die Patenterteilung: **19.04.2006**
(21) Anmeldenummer: 01986570.8
(22) Anmeldetag: 05.10.2001
(51) Int. Cl.: A01K 1/015

(54) **ANORDNUNG FÜR BOXENLAUFSTALL MIT RILLENFLUR, ZUGEHÖRIGE BETONFERTIGTEILPLATTE UND TIERHALTUNGSVERFAHREN**
SYSTEM FOR A FREE STALL BARN WITH A GROOVED FLOOR, CORRESPONDING PRECAST CONCRETE SLAB AND ANIMAL KEEPING METHOD
DISPOSITIF POUR ETABLE A STABULATION LIBRE COMPRENANT UNE AIRE RAINUREE, PLAQUE PREFABRIQUEE EN BETON ASSOCIEE ET PROCEDE D'ELEVAGE D'ANIMAUX

(30) Priorität: 13.10.2000 DE 10050853; 25.07.2001 DE 20112280 U
(43) Veröffentlichungstag der Anmeldung: 16.07.2003
(73) Patentinhaber: Reuver, Hermannus S.F., 21683 Butzflethermoor (DE)
(72) Erfinder: Reuver, Hermannus S.F., 21683 Butzflethermoor (DE)
(74) Vertreter: Hansen, Jochen
(86) Internationale Anmeldenummer: PCT/DE2001/003836
(87) Internationale Veröffentlichungsnummer: WO 2002/030178

(56) Entgegenhaltungen:
- EP-A- 0 609 581
- DE-A- 2 910 767
- DE-U- 29 907 118
- US-A- 3 824 960

## Beschreibung

Die Erfindung betrifft eine Anordnung für Boxenlaufstall oder dergleichen zur Viehhaltung, insbesondere für Rindvieh, mit einem als Betonplatte ausgebildeten Rillenflur, eine Betonfertigteilplatte für diese Anordnung sowie ein Tierhaltungsverfahren in einer derartigen Anordnung.

Für die intensive Viehhaltung, insbesondere von Rindvieh, sind Boxenlaufställe ein guter Kompromiß für eine ökonomische, intensive Viehhaltung mit ausreichender Bewegungsfreiheit für das Vieh. Dabei wird dem Vieh neben dem jeweilig zugeordneten Boxen-Stallplatz ein Lauf- oder Freigang angeboten, auf dem sich das Vieh frei bewegen kann.

Im Stand der Technik wurde bei diesem Laufgang zur einfachen Entsorgung von Urin und Fäkalien der Tiere auf das Einstreuen von Stroh verzichtet und ein Spaltenboden mit darunter angeordneter Güllegrube vorgesehen. Derartige Spaltenböden sind beispielsweise in der EP 0 609 581 A1 und der DE 299 07 118 U1 beschrieben. Ferner wird in diesen beiden Druckschriften vorgeschlagen, als Auftrittsfläche für das Vieh eine Asphalt- oder Bitumenschicht vorzusehen. Dabei sind die Spaltenbodenelemente beispielsweise einstückig so geformt, daß sich vorstehende Kanten zur Kantenverstärkung an den Spaltenrändern für die Bitumenauflage bilden.

Nachteilig ist jedoch, daß das Vieh ständig den Ausgasungen der unter dem Spaltenboden gesammelten Gülle ausgesetzt ist. Daher ist es bekannt, Boxenlaufställe mit als Rillen- oder Schlitzflur ausgebildeten Laufgängen auszustatten.

Der Rillenflur ist als Betondecke oder Betonfertigteil mit als Nuten ausgebildeten Rillen hergestellt und schließt die darunter liegende Güllegrube im wesentlichen ab. Die Gülle gelangt über in den Rillen angeordneten Durchgangsbohrungen in die darunter befindliche Grube. Die Gasbelästigung ist entsprechend verringert.

Aus der Preisliste 2000/2001 der Firma Brouwers Stalinrichtingen B.V., 8901 BA Leeuwarden, Holland, Seite 74 ist ein gattungsgemäßer Rillenflur bekannt, der einen hin- und herlaufenden Schieber mit Hartgummiblock zur Reinigung der Fluroberflächen und Rillen aufweist.

Ferner sind auf dem Untergrund auflegbare Matten, beispielsweise aus dem Prospekt "UBO" der Firma M. Glöggler, Neu-Ulm/Schwaighofen, seit dem 25. Juni 1981 beim Deutschen Patent- und Markenamt sowie aus DE 26 10 954 A1 bekannt. Diese Matten bestehen aus im wesentlichen homogenem Gummi-Material, mit dem insbesondere der Liegekomfort für das Vieh aufgrund der elastischen und wärmedämmenden Eigenschaften erhöht werden soll.

Beim vorgenannten derzeitigen Stand der Technik ist nachteilig, daß Fäkalien und Urin der Tiere miteinander gemischt und ungebunden als sog. Gülle anfällt. Die Handhabungsvorteile der jetzt meist angewendeten Gülletechnik gegenüber der früheren manuellen Stroheinstreuung und Ausmistung werden mit den erheblich aggressiveren Eigenschaften der Gülle erkauft. Aufgrund der Gasentwicklung in Güllegruben besteht ein Gesundheitsrisiko für Mensch und Tier und ein erhebliches Unfallrisiko für das Personal bei Wartung oder Reparatur an Güllegruben. Beim Durchmischen der Gülle in der Güllegrube vor dem Abziehen der Gülle werden die schädlichen Gase besonders stark herausgelöst und vergrößern die Gesundheitsrisiken. Bei der Düngung mit Gülle wirkt das in der Gülle entstehende sog. "Blausäuregas" toxisch für das Bodenleben, so daß das Bodenleben inaktiviert und/oder verringert wird und damit die Bodenqualität verschlechtert wird, was zu einer Ertragsschwächung führt. Ferner entsteht durch die Ausspülung von kaum gebundenen Nitraten eine erhebliche Grundwasserbelastung.

Ferner ist nachteilig, daß der Komfort für das Vieh im Vergleich zu stroheingestreuten Ställen geringer ist. Der Betonboden ist für die Tiere sehr hart und kalt. Ferner besteht Verletzungsgefahr für das Vieh durch Ausrutschen auf der relativ glatten Betonfläche.

Aufgabe der Erfindung ist es, ausgehend vom gattungsgemäßen Rillenflur eine verbesserte Anordnung für einen Boxenlaufstall sowie ein verbessertes Tierhaltungsverfahren dafür anzugeben, bei dem bei einfacher Handhabung eine Komfortverbesserung für das Vieh erreicht und der Anfall von Gülle vermieden wird.

Gelöst wird diese Aufgabe mit den Merkmalen des Anspruchs 1 bzw. den Merkmalen des Anspruchs 22.

Dadurch, daß die Fluroberfläche zwischen benachbarten Rillen nahe an die Rillen heranreichend mit einem elastischen und rutschhemmenden Belag versehen ist, wird der Komfort der von den Tieren betretenen Oberfläche verbessert. Der elastische und rutschhemmende Belag verhindert auch ein Ausrutschen der Tiere auf der Fläche. Ein unerwünschtes Abscheren des Belags am Rillenrand wird dadurch vermieden, daß der Belag bereits vor dem Rillenrand endet.

Dadurch, daß die Rillen im Flur durch stabile U-Profile aufgespannt sind, werden im wesentlichen verschleißfreie Rillenflanken gebildet. Die Rillenbreite kann somit optimal an das den Rillenflur benutzende Vieh angepaßt werden, da ein Ausbrechen der Rillenflanken und folglich Verletzungen im Fußbereich der Tiere durch das U-Profil verhindert werden.

Bevorzugt sind die U-Profile aus bruchfestem Hartkunststoff oder Metall, insbesondere Stahl, hergestellt. Kunststoffprofile sind zwar im wesentlichen verrottungsfest, neigen jedoch an ihrer oberen Kante zu etwas höherem Verschleiß, wohingegen Stahl-U-Profile in der sauren Umgebung zwar schnell Rost ansetzen, jedoch geringeren Verschleiß an der oberen Trittkante haben.

Bei der Herstellung des Rillenflurs wird das U-Profil zu 1/3 bis 5/6 der Schenkelhöhe in die Betondecke einbetoniert, wohingegen der Rest der Höhenerstreckung zwischen benachbarten U-Profilen mit dem Belag ausgefüllt wird. Das U-Profil ist somit fest in der Betonplatte verankert. Bei Neuaufbau der Rillenfluroberfläche nach Erreichen der Nutzungsgrenzwerte wird der Restbelag an der Oberfläche entfernt und die U-Profile durch Heraushebeln und/oder Ausbrennen aus der Betondecke entfernt. Neue U-Profile werden dann in die bestehenden Beton-Nuten mit geeigneten Befestigungsmitteln verankert und ein neuer Oberflächenbelag zwischen benachbarten U-Profilen aufgebracht.

Das U-Profil weist eine Schenkelhöhe von 2 bis 20 cm, bevorzugt ca. 10 cm auf und bildet eine Rillenweite von 3 bis 4 cm, bevorzugt 3,5 cm. In der bevorzugten Ausführung taucht das U-Profil ca. 7 cm in die Betondecke ein, so daß der Oberflächenbelag etwa 3 cm stark ist.

Um einen gleichbeabstandeten, maßhaltigen Aufbau der durch die U-Profile aufgespannten Rillen zu erleichtern, sind die parallel angeordneten U-Profile an ihrer Basis im gewünschten Abstand mit einem Verbindungselement verbunden, bevorzugt mittels untergeschweißtem Flacheisen. Neben der teilweisen Einbetonierung der U-Profile gemäß Anspruch 5, können diese vorgefertigten U-Profil-Gitter insbesondere bei geringer Schenkelhöhe der U-Profile von nur wenigen Zentimetern direkt auf einer ebenen Betondecke, bespielsweise mittels Dübellöchern und Schrauben, befestigt werden und die Zwischenräume ausschließlich mit dem Belag aufgefüllt werden. Obwohl bei dieser Anordnung die Rillenflanken durch die stabilen U-Profilschenkel, bevorzugt Stahlprofile, dauerhaft aufgespannt sind, und durch Vermeidung von ausgetretenen Flanken eine Verletzungsgefahr für das Vieh vermieden wird, ist jedoch ein erheblicher Herstellungsaufwand für den Rillenflurboden zu kalkulieren.

Dadurch, daß die Rillen vollständig vom Beton der Betonplatte aufgespannt sind, ist das zeitaufwendige Herstellungsverfahren mit gesondert eingelegten Stahl-U-Profilen nicht erforderlich. Die Betonplatte kann "in einem Guß" hergestellt werden. Um jedoch gleichwohl die erhebliche Komfortverbesserung für das Vieh durch Bereitstellung eines elastischen und rutschhemmenden Belages sicherzustellen, wird der Flurbereich zwischen aneinandergrenzenden Rillen zur Aufnahme eines elastischen und rutschhemmenden Belags abgesenkt ausgeführt. Die unmittelbar an den Rillen vorgesehenen Stege aus Beton bilden dabei quasi die Gußform für den aufzufüllenden elastischen Belag.

Dadurch, daß die Aufnahmevertiefung der Betonplatte zwischen benachbarten Rillen in Querschnittsrichtung zu den Rillen rechteckigen oder halbelliptischen Querschnitt aufweist, wird eine für den elastischen Belag geeignete Materialstärke hinsichtlich Komfortverbesserung und Abriebfestigkeit sichergestellt, wobei die die Rillen umgebenden Rillenrandbereich aus Beton ausreichend stabil ausgebildet sind.

Dadurch, daß der aus Beton gebildete Randbereich zu den Rillen an der Oberfläche beidseits der etwa 3 cm breiten Rille eine Breite von jeweils 2 cm und die Absenkung der Betonoberfläche durchschnittlich etwa 2 cm beträgt, wird ein ausreichend stabiler Rillenrandbereich aus Beton bereitgestellt, wobei die für die Komfortverbesserung vorgesehene Asphaltschicht einen sehr großen Teil der Oberfläche bildet.

Dadurch, daß der aus Beton bestehende Rillenrandbereich mit einem Verstärkungselement, bevorzugt einem Armierungsstahl, verstärkt ist, wird die Festigkeit des Betonrandbereichs neben den Rillen erhöht, ein mögliches Abbrechen der Betonkante wird damit weitestgehend vermieden. Das Verstärkungselement kann beispielsweise aus einem im Beton im Randbereich eingegossenen Armierungsstahl oder aus einem bis zur Oberfläche reichenden Stahl-Verstärkungsprofil bestehen.

Bevorzugt ist der elastische Belag aus einer bitumenartigen Masse, bevorzugt Asphalt, oder einem Elastomer gebildet. Asphalt ist ein ausreichend elastischer und rutschhemmender Oberflächenbelag, der insbesondere auch widerstandsfähig gegen die Beanspruchung durch Urin und Fäkalien ist. Darüber hinaus ist Asphalt ein kostengünstiges und leicht zu verarbeitendes Material. Alternativ kann die Oberfläche auch aus einem säurefesten Elastomer gebildet werden, der bei höherem Kostenaufwand noch eine weitere Komfortverbesserung ergeben kann.

Die U-Profile sind parallel in Längsrichtung des Rillenflurs angeordnet und weisen einen Mittenabstand zueinander von 16 - 50 cm, bevorzugt 25 cm, auf. Damit wird eine ausreichende Flüssigkeitsaufnahmekapazität der Rillen bei gleichzeitig möglichst breiten Standflächen für das Vieh bereit gestellt.

Dadurch, daß an wenigstens einem Kopfende des Rillenflurs eine Jauchegrube mit Spaltenboden zur Aufnahme der in den Rillen gesammelten Flüssigkeiten angeordnet ist, wird die vom Stroh und ggf. Sand nicht aufgenommene Flüssigkeit effektiv aufgefangen. Die an wenigstens einem Kopfende des Rillenflurs angeordnete Jauchegrube kann zu Reinigungszwecken durch Abnahme der Spaltenbodenbalken ohne gravierenden Einfluß auf die Viehhaltung gereinigt werden, beispielsweise zum Ausbaggern mitgeschwemmter Festteile. Im normalen Betrieb dient der Spaltenboden als Verbindungsgang zwischen parallel angeordneten Rillenfluren.

Wenn auf dem Rillenflur ein Ausmistsystem mit in Längsrichtung der Rillen bewegbaren Schieber angeordnet ist, wird ein automatisches Ausmisten des Rillenflurs ermöglicht. Bevorzugt in Verbindung mit der an einem Kopfende des Rillenflurs angeordneten Jauchegrube mit Spaltenboden werden die festen Bestandteile, nämlich der Mist, über in Längsrichtung anschließende Tore aus dem Boxenlaufstall auf einem Mistzwischenlager hinausbefördert. Die Jauche gelangt über die Spalten in die Jauchegrube.

Um eine besonders effektive Reinigung des Rillenflurs mit dem Ausmistsystem zu erreichen, weist der Schieber zinkenförmige, der Rillenanordnung entsprechende Ansätze auf, die beim Betrieb in die Rillen eingreifen.

Dadurch, daß der Rillenflur aus Betonfertigteilplatten gebildet ist, kann der Rillenflur durch aneinanderzufügende Betonfertigteile vor Ort schnell aufgebaut werden, ohne daß lange Trockenzeiten für den Beton zu berücksichtigen sind. Betonfertigteile können industriell in hoher Maßhaltigkeit kostengünstig produziert werden.

Beim Nachrüsten herkömmlicher Boxenlaufställe, die mit einem Güllebecken unterhalb des als Spaltenboden ausgebildeten Laufganges versehen sind, können die Betonfertigteilplatten als Austauschelemente für die Spaltenbodenbalken auf den Rand der Güllegrube aufgelegt werden. In den Rillen angeordnete Durchgangsbohrungen erlauben den Flüssigkeitsdurchtritt vom Rillenflur in die ehemalige Güllegrube.

Die Betonfertigteilplatte zum Aufbau einer erfindungsgemäßen Anordnung entspricht bevorzugt der Flurbreite und weist in Längsrichtung zur paßgenauen Ausrichtung der aneinanderzufügenden Platten Passungselemente auf. Durch die Passungselemente sind die Rillen der aneinanderzufügenden Fertigteilplatten in Längsrichtung ausgerichtet, so daß ein mit in die Rillen eingreifenden Zinken versehener Ausmistschieber an den Plattenübergängen nicht verhakt.

Bevorzugt bestehen die Passungselemente aus an einer Stirnseite der Platte angeordneten Vorsprüngen und an der anderen Stirnseite der Platte angeordneten zugeordneten Aufnahmen.

Dadurch, daß in Flurbreite im wesentlichen gleich beabstandete Rillen vorgesehen sind, wobei in der Mitte ein breiteres Betonmittelteil und am Rand jeweils ein Seitenstreifen ohne Aufnahmevertiefungen für einen elastischen Belag vorgesehen sind, wird eine bevorzugte Flurgestaltung angegeben, bei der in der Mitte eine etwas breitere Betonoberfläche und an den Seiten eine schmalere Betonoberfläche für die Auflage eines hin- und herbewegbaren Ausmistschiebers vorgesehen ist.

Eine erhebliche Komfortverbesserung für das Vieh wird durch das Einstreuen von einem organischen oder mineralischen Bindemittel, beispielsweise Stroh, geschreddertes Stroh, Holzspäne und/oder Sand, im Boxenlaufstall erreicht. Die Einsteuung bindet wie nach uralter Tradition die Fäkalien zu Mist. Die flüssigen Bestandteile werden in den Rillen gesammelt und zur Jauchegrube geführt. Mit einem bekannten automatischen Ausmistsystem, insbesondere nach Anspruch 15 und 16, wird der im Rillenflur aufliegende Mist aus dem Stall zu einem Sammelplatz gefördert.

Da Mist ein wertvollerer Dünger mit besserer Mitratbindung ist als Gülle, ist diese Trennung aus ökologischen Gründen ebenfalls vorteilhaft. Darüber hinaus ist die in der Grube gesammelte Jauche weniger aggressiv als die Gülle. Die eingangs geschilderten Risiken für das Bedienpersonal sind an Jauchegruben deutlich geringer.

Um die Störanfälligkeit beim automatischen Ausmisten zu verringern und die sofortige Einsetzbarkeit des gesammelten Mistes als Dünger zu ermöglichen, kann das Stroh feingeschnitten im Boxenlaufstall verteilt werden.

Durch ergänzendes Einstreuen von Holzspänen (Streu) und/oder Sand im Boxenlaufstall kann eine weitere Verbesserung der Flüssigkeits- und Fäkalienbindung erreicht werden. Durch die Zugabe dieser organischen bzw. mineralischen Bestandteile wird die Qualität des Mistes weiter erhöht.

Nachfolgend werden verschiedene Ausführungsbeispiele der Erfindung anhand der Zeichnungen detailliert erläutert.

Darin zeigt:
- Fig. 1: im Grundriß einen Boxenlaufstall mit Rillenflur,
- Fig. 2: im Querschnitt einen Ausschnitt des Rillenflurs entlang der in Fig. 1 gestrichelt dargestellten Linie II-II,
- Fig. 3: eine Rillenflurbetonplatte als Fertigteil in 3-dimensionaler Ansicht,
- Fig. 4: einen Querschnitt durch die Betonplatte der Fig. 3 entlang der gestrichelt dargestellten Linie IV - IV,
- Fig. 5: einen Querschnitt entlang der Stirnfläche einer erfindungsgemäßen Betonfertigplatte im Ausschnitt,
- Fig. 6: drei aneinanderzufügende bzw. aneinandergefügte Betonfertigteilplatten in Ausführungsform gemäß Fig. 5 in Draufsicht und
- Fig. 7: eine alternative Ausführungsform der Rillenflurbetonplatte im Querschnitt.

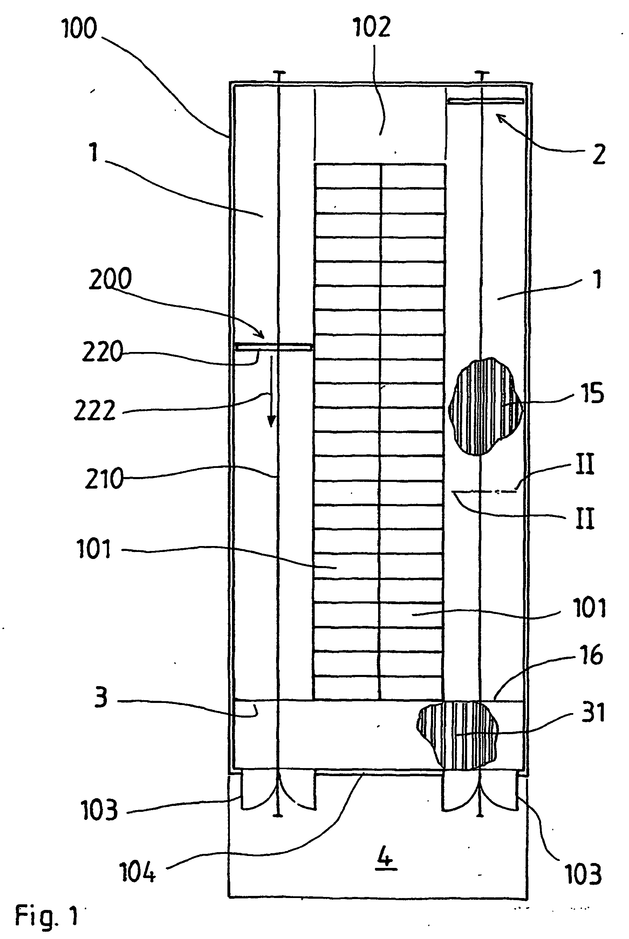

In Fig. 1 ist der Grundriß eines Boxenlaufstalls 100 schematisch dargestellt. Der rechteckige Stall 100 weist im dargestellten Ausführungsbeispiel eine mittig im Stall 100 angeordnete Doppelreihe von Boxen 101 auf. Jede Box 101 bietet Platz für eine Kuh. An beiden Seiten der Boxenreihen ist in Längserstreckung des Stalls 100 je ein Laufflur 1 vorgesehen, der als Rillenflur mit Rillen 15 ausgebildet ist, wobei in Fig. 1 der Übersichtlichkeit halber nur eine ausgeschnittene Fläche mit Rillen dargestellt ist.

Am in der Zeichnung oberen Ende des Stalls sind die beiden Rillenflure 1, 1 durch einen Laufgang 102 verbunden. Auf dem in der Zeichnung unten dargestellten Ende der Boxenreihen schließt sich am Kopfende 16 der beiden Rillenflure 1, 1 eine mit einem in Fig. 1 der Übersichtlichkeit halber nur in einer angeschnittenen Fläche dargestellten Spaltenboden 31 belegte Jauchegrube 3 an. Der Spaltenboden 31 auf der Jauchegrube 3 ist so angeordnet, daß die Spalten des Spaltenbodens 31 in fluchtender Verlängerung der Rillen 15 der Rillenflure 1, 1 ausgerichtet sind. In Verlängerung der Rillenflure 1, 1 sind Tore 103, 103 in der der Jauchegrube 3 zugeordneten Stallstirnwand 104 vorgesehen.

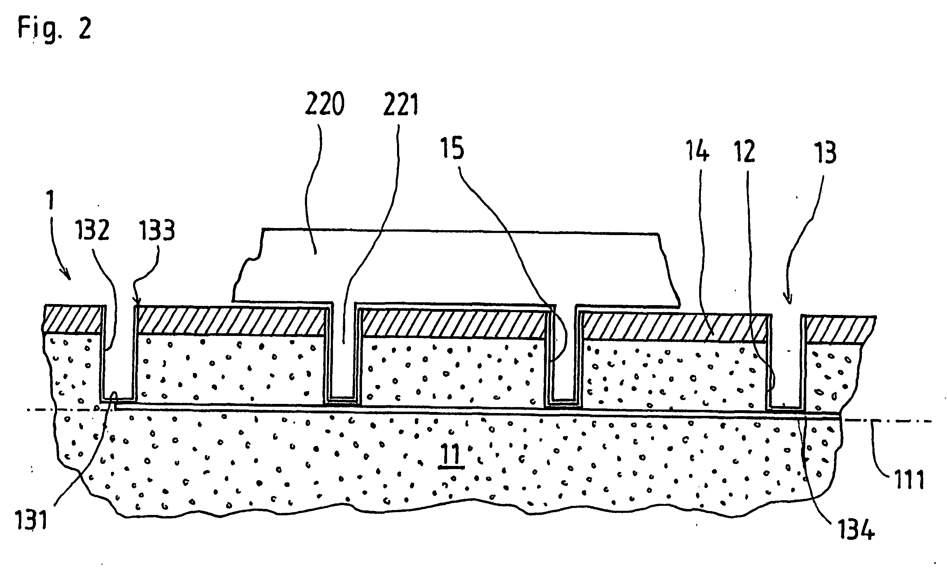

Auf jedem Rillenflur 1 ist ein Ausmistsystem 200 installiert, das einen die Breite des Rillenflures überdeckenden Schieber 220 mit zur Rillenflurgeometrie zugeordneten Zinken 221 (siehe Fig. 2) aufweist. Der Schieber 220 wird durch Zug- oder Schubelemente 210 in Längsrichtung des Rillenflures 1 von einer nicht dargestellten Antriebseinheit je nach Bedarf hin- und herbewegt.

Im dargestellten Ausführungsbeispiel wirkt der Schieber 220 nur bei Bewegung in Pfeilrichtung 222. Dabei wird der mit dem Schieber 220 aufgenommene Mist entlang des Rillenflures 1 über den Spaltenboden 31 und durch das geöffnete Tor 103 auf ein außerhalb des Boxenlaufstalls 100 angeordnetes Mistzwischenlager 4 geschoben. Die in den Rillen 15 angesammelte Flüssigkeit wird beim Ausmisten mit dem Schieber 220 durch die Zinken 221 ebenfalls in Richtung Spaltenboden 31 transportiert. Dabei fließt die Jauche im wesentlichen durch den Spaltenboden 31 in die darunter befindliche Jauchegrube 3. Entsprechend sind die Spalten des Spaltenbodens 31 mit den Rillen der Rillenflure 1, 1 fluchtend ausgerichtet. Um ein freies Durchtreten des mit in die Rillen 15 eingreifenden Zinken 221 ausgestatteten Schiebers 220 über den Spaltenboden 31 hinweg zu ermöglichen, sind die an den Spaltenbodenbalken angeformten Abstandshalter an der Oberseite ausgespart.

Fig. 2 zeigt in einem Ausschnitt einen Rillenflur 1 im Querschnitt mit einem darüber gleitenden Schieber 220 ebenfalls im Ausschnitt. Der Rillenflur 1 besteht aus einer Tragkonstruktion 11 aus Beton, die zunächst planeben bis zur strichpunktierten Linie 111 geschüttet wird. Die Rillen 15 des Rillenflures 1 werden durch U-Profile 13, beispielweise Stahlprofile, gebildet. Die U-Profile 13 liegen mit ihrer Basis 131 auf dem Schüttabsatz 111 auf. Die Schenkel 132 der U-Profile 13 ragen nach oben und bilden die freizuhaltende Rille 15. Der Zwischenraum ist dann teilweise mit Beton verfüllt, wobei ein oberer Abschnitt mit einem rutschhemmenden und elastischen Belag 14 verfüllt ist. Dieser Belag 14 bildet zusammen mit den oberen Kanten 133 der Schenkel 132 der U-Profile 13 die Lauffläche des Rillenflurs 1. Zur leichteren Montage werden die U-Profile 13 parallel und gleich beabstandet mittels Verbindungselemente 134, beispielsweise aus Flacheisen, gehalten.

Im dargestellten Ausführungsbeispiel haben die Stahl-U-Profile 13 die Dimension 100 × 40 × 3, und sind auf Flacheisen 134 der Dimension 60 × 8 aufgeschweißt, womit die durch die U-Profile 13 aufgespannten Rillen 15 eine lichte Weite von 34 mm haben.

Diese vorgefertigen U-Profil-Gitter werden auf der geschütteten Tragkonstruktion (Schüttabsatz 111) aufgelegt, ausgerichtet sowie in Längsrichtung miteinander verschweißt und anschließend bis zu einer Höhe von 7 cm einbetoniert. Die restliche Höhenerstreckung zwischen benachbarten U-Profilen von 3 cm wird mit Straßenasphalt als Oberflächenbelag 14 gefüllt.

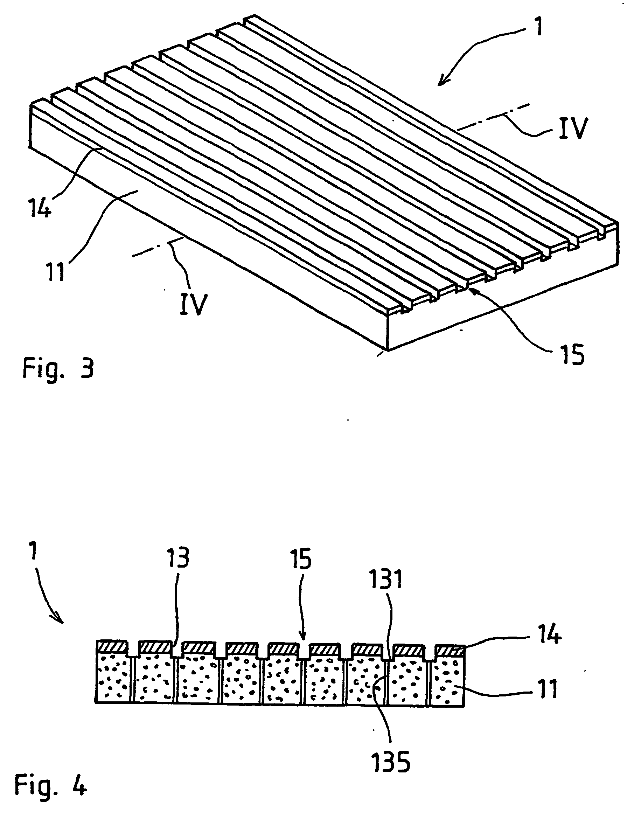

Die Fig. 3 und 4 zeigen ein weiteres Ausführungsbeispiel für den Rillenflur 1, bei dem die Tragkonstruktion 11 als Betonfertigteil in standardisierten Abmessungen vorgefertigt ist. Dabei zeigt Fig. 3 in räumlicher Ansicht ein Betonfertigteil für die Auflage auf herkömmlichen Güllegruben als Austauschelement für die herkömmlichen Spaltenbodenbalken.

Wie in Fig. 4 im Querschnitt dargestellt, haben die dort zeichnerisch nicht aufgelösten U-Profile 13 in diesem Ausführungsbeispiel lediglich eine Schenkelhöhe von 40 mm um bei einer Gesamtstärke der Flurplatte von 20 cm eine ausreichende Tragfähigkeit der durch die Aufnahmenuten für die U-Profile geschwächten Platte zu gewährleisten. In diesem Fall sind die U-Profile 13 nur ca. 1 cm im Beton vergossen, so daß weiterhin für den Asphaltbelag 14 eine Stärke von ca. 3 cm verbleibt.

Im Unterschied zum vorgenannten Ausführungsbeispiel sind hier Ablaufbohrungen 135 in der Basis 131 der U-Profile 13 und in Verlängerung durch die Betonplatte vorgesehen, um die in den Rillen gesammelte Jauche in die darunter befindliche Grube abzuführen.

Mit diesem Auführungsbeispiel kann ein herkömmlicher Boxenlaufstall mit Güllesammelbecken unter einem Spaltenboden ohne großen Aufwand in eine erfindungsgemäße Anordnung umgewandelt werden. Die Spaltenbodenbalken werden abgehoben und durch die Fertigbetonteilplatten mit eingearbeiteten Rillenprofilen ersetzt.

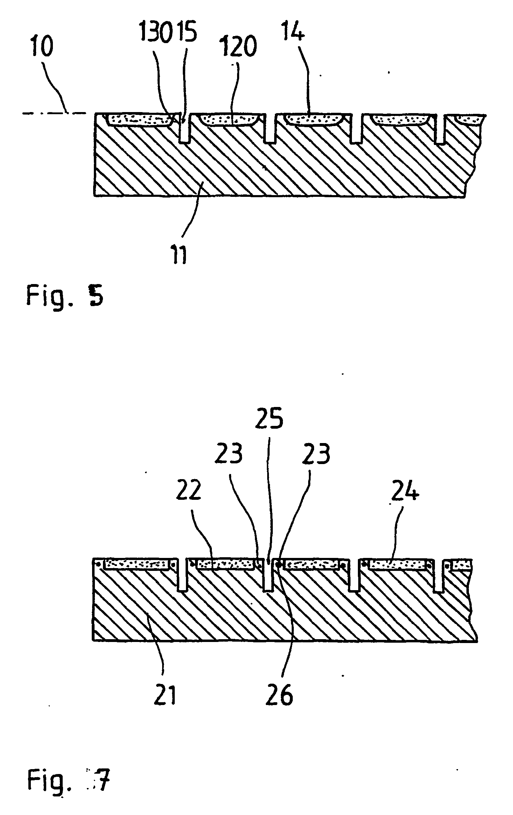

In einer weiteren Ausführungsform sind die Rillen vollständig vom Beton der Betonplatte aufgespannt. Fig. 5 zeigt in Stirnansicht im Ausschnitt eine Betonfertigteilplatte 11 in der mehrere parallel angeordnete Rillen 15 ausgebildet sind. Zwischen benachbarten Rillen 15 weist die Betonplatte eine fast bis zu den Rillen reichende Aufnahmevertiefung 120 auf. Die Aufnahmevertiefung 120 hat in der in Fig. 5 dargestellten Stirnansicht flachen halbelliptischen Querschnitt.

An den Rillen 15 sind bis an die Lauffluroberfläche 10 reichende schmale Betonrandbereiche 130 ausgebildet. Durch den halbelliptischen Querschnitt der Aufnahmevertiefung 120 ist der Betonrandbereich im Gefüge der Betonplatte 11 in einer stetigen, sich zur Oberfläche 10 verjüngenden Gestalt ausgebildet. Entsprechend belastungsstabil sind die Betonrandbereiche 130.

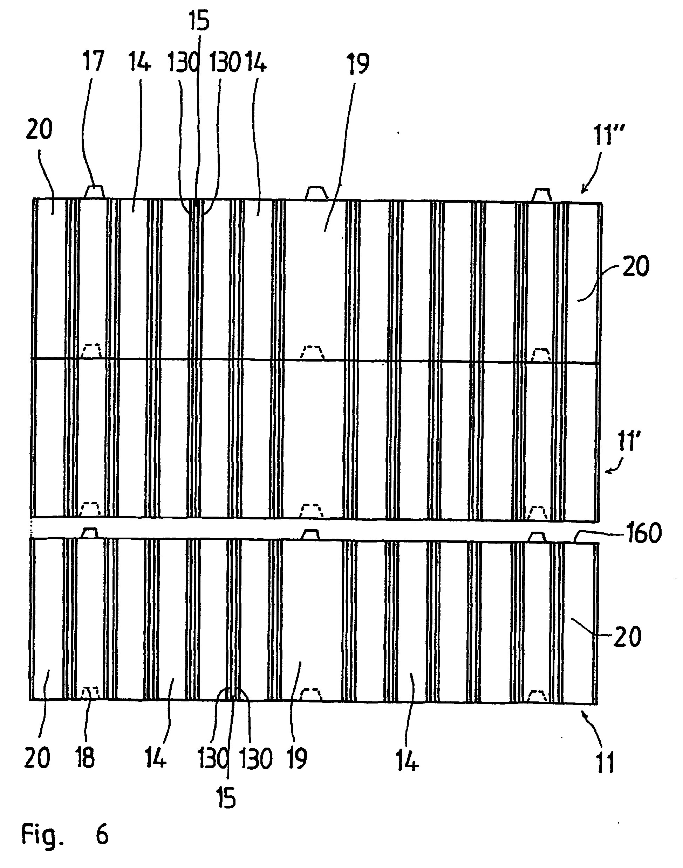

In Fig. 6 sind drei aneinanderzufügende bzw. aneinandergefügte Betonfertigteilplatten 11, 11' und 11" in Draufsicht dargestellt. Die Betonfertigteilplatten 11, 11', 11" entsprechen dem in Fig. 5 dargestellten Ausführungsbeispiel. Die Betonfertigteilplatten weisen die Breite des zu erstellenden Rillenflures auf und haben eine standardisierte Länge, so daß die einzelne Rillenflurbetonplatte als Fertigteil noch gut handhabbar und transportfähig ist. Durch Aneinanderfügen einer entsprechenden Anzahl von Betonfertigteilplatten in Längsrichtung wird die für den auszustattenden Stall benötigte Flurlänge gebildet.

Um eine paßgenaue Ausrichtung der aneinanderzufügenden Platten sicherzustellen, sind an den Stirnseiten 160 der Betonfertigplatten 11, 11', 11'' wechselseitig Passungselemente 17, 18 ausgebildet. Im dargestellten Ausführungsbeispiel bestehen die Passungselemente aus an einer Stirnseite der Platte angeordneten Vorsprüngen 17 und an der anderen Stirnseite dazu ausgerichteten Aufnahmen 18.

In Fig. 6 sind die Betonfertigteilplatten 11' und 11" im bereits zusammengefügten Zustand dargestellt. Die an der Oberfläche nicht mehr sichtbaren Passungselemente sind an der Fügekante gestrichelt dargestellt. Weiter ist die Betonfertigteilplatte 11 vor dem Anfügen an Betonfertigteilplatte 11' dargestellt. Entsprechend sind die Vorsprünge 17 an Stirnseite 160 der Betonfertigteilplatte 11 erkennbar. In der zugeordneten Stirnseite 160 der Betonfertigteilplatte 11' sind die für die Vorsprünge 17 vorgesehenen Aufnahmen 18 gestrichelt wiedergegeben.

Ferner ist in Fig. 6 eine bevorzugte Rillenaufteilung in der Draufsicht erkennbar. Der Rillenflur weist insgesamt zwölf Rillen 15 auf, die jeweils zu sechs gleichbeabstandeten Rillen beidseits eines Betonmittelteils 19 angeordnet sind. Das Mittelteil 19 dient als stabile Auflage für den durch eine Schubstange hin- und herbewegbaren Ausmistschieber. Ferner ist außen jeweils ein Seitenstreifen 20 ausgebildet, der ebenfalls lediglich eine Betonoberfläche aufweist, also keine Aufnahmevertiefung für Asphalt hat.

In Fig. 7 ist eine alternative Ausführungsform einer Rillenflurbetonplatte 21 im Querschnitt in einem Ausschnitt dargestellt. Die Betonfertigteilplatte 21 weist zwischen benachbarten Rillen 25 ebenso wie das vorherige Ausführungsbeispiel eine Aufnahmevertiefung 22 auf. Die Aufnahmevertiefung 22 weist jedoch einen rechteckigen Querschnitt auf. Diese Aufnahmevertiefung 22 ist ebenfalls mit einem Asphaltbelag 24 aufgefüllt.

Aufgrund der rechteckig ausgebildeten Aufnahmevertiefung 22 weist der Betonrandbereich 23 beidseits senkrechte Flanken auf. Zur Verstärkung des Randbereichs 23 ist hier ein Armierungsstahl 26 im Beton eingegossen.

Besonders wichtig ist, daß die erfindungsgemäße Boxenlaufstallanordnuhg mit einer Einstreu von Stroh verwendet wird und beim Ausmisten eine Trennung von Strohmist und Jauche erfolgt.

Wie aus uralter traditioneller Tierhaltung bekannt, wirkt Stroh bindend für die Fäkalien der Tiere und erhöht das Wohlbefinden der Tiere. Mit der erfindungsgemäßen Anordnung wird auf einfache Weise erreicht, daß Jauche und Mist durch übliche Schiebersysteme automatisiert ausgetragen werden können, wobei aufgrund der Anordnung eine weitestgehende Trennung der flüssigen und festen Bestandteile möglich ist. Der Strohmist ist ein idealer Bodendünger insbesondere für landwirtschaftlich bewirtschaftete Flächen. Durch die organisch wertvolle und nichttoxische Düngung mit dem anordnungs- und verfahrensgemäß produzierten Strohmist wird das Bodenleben des gedüngten Weide- und/oder Ackerlandes aktiviert. Der Boden wird fruchtbarer.

Ergänzend zum Stroh als Einstreu können auch Holzspäne und/oder Sand verwendet werden, die als organische bzw. mineralische Bestandteile die Qualität des Mistes weiter erhöhen und eine zusätzliche Feuchtigkeitspufferung ermöglichen.

Mit der erfindungsgemäßen Anordnung und dem zugehörigen Tierhalteverfahren wird neben verbesserter Tiergesundheit organisch wertvoller Bodendünger erzeugt, der zu dauerhaft ertragsreicheren Böden führt. Der Ertrag, der von der Fläche abgeerntet wird, ist mit dem Düngeeintrag viel leichter auszubalancieren. Es besteht sowohl ein ökologischer wie auch ökonomischer Vorteil bei Anwendung der Erfindung in der Landwirtschaft. Die Erfindung kann auch von extensiven, ökologischen oder sogenannten "Bio"-Betrieben vorteilhaft genutzt werden.

### Bezugszeichenliste

- 1: Rillenflur, Laufflur
- 10: Lauffluroberfläche
- 100: Boxenlaufstall
- 101: Box
- 102: Laufgang
- 103: Tor
- 104: Stallstirnwand
- 11: Tragkonstruktion, Betonplatte
- 111: Schüttabsatz
- 12: Nut
- 120: Aufnahmevertiefung
- 13: U-Profil
- 130: Betonrandbereich
- 131: Basis
- 132: Schenkel
- 133: Obere Kante
- 134: Verbindungselement, Flacheisen
- 135: Ablaufbohrung

- 14: (Asphalt-)Belag
- 15: Rille
- 16: Kopfende
- 160: Stirnseite
- 17: Vorsprung, Passungselement
- 18: Aufnahme, Passungselement
- 19: Betonmittelteil
- 20: Seitenstreifen
- 21: Betonfertigteilplatte
- 22: Aufnahmevertiefung
- 23: Betonrandbereich
- 24: Asphaltbelag
- 25: Rille
- 26: Armierungsstahl

- 200: Ausmistsystem
- 210: Zug- oder Schubelement
- 220: Schieber
- 221: Zinke, Ansatz
- 222: Bewegungsrichtung

- 3: Jauchegrube
- 31: Spaltenboden

- 4: Mistzwischenlager

## Patentansprüche

1. Anordnung für Boxenlaufstall oder dergleichen zur Viehhaltung, insbesondere Rindvieh, mit einem als Betonplatte (11) ausgebildeten Rillenflur (1) mit einer Fluroberfläche (10), **dadurch gekennzeichnet, daß** die Fluroberfläche (10) zwischen benachbarten Rillen (15) nahe an die Rillen heranreichend mit einem elastischen und
rutschhemmenden Belag (14) versehen ist, so daß dieser vor dem Rillenrand endet.

2. Anordnung nach Anspruch 1, **dadurch gekennzeichnet, daß** die Rillen (15) im Flur (1) durch stabile U-Profile (13) aufgespannt sind und die Flur-Oberfläche zwischen benachbarten U-Profilen (13) mit dem elastischen und rutschhemmenden Belag (14) versehen sind.

3. Anordnung nach Anspruch 2, **dadurch gekennzeichnet, daß** die U-Profile (13) aus bruchfestem Hartkunststoff oder Metall, bevorzugt Stahl, gebildet sind.

4. Anordnung nach Anspruch 2 oder 3, **dadurch gekennzeichnet, daß** die Betonplatte (11) auf ihrer Oberseite Aufnahmenuten (12) für die U-Profile (13) aufweist.

5. Anordnung nach Anspruch 2, 3 oder 4, **dadurch gekennzeichnet, daß** das U-Profil (13) zu 1/3 bis 5/6 der Schenkelhöhe in die Betonplatte (11) eintaucht und der Rest der Höhenerstreckung zwischen benachbarten U-Profilen (13) mit dem Belag (14) ausgefüllt ist.

6. Anordnung nach Anspruch 2, 3, 4 oder 5, **dadurch gekennzeichnet, daß** das U-Profil (13) Schenkel (132) mit einer Höhe von 2 - 20 cm, bevorzugt ca. 10 cm, hat und mit der Basis (131) eine Rillenweite von 3 - 4 cm, bevorzugt 3,5 cm, aufspannt.

7. Anordnung nach einem der Ansprüche 2 bis 6, **dadurch gekennzeichnet, daß** die parallel angeordneten U-Profile (13) an ihrer Basis (131) im gewünschten Abstand mit einem Verbindungselement (134) verbunden sind, bevorzugt mittels untergeschweißtem Flacheisen.

8. Anordnung nach Anspruch 1, **dadurch gekennzeichnet, daß** die Rillen (15) vollständig vom Beton der Betonplatte (11) aufgespannt sind, wobei die Betonplatte (11) zwischen benachbarten Rillen (15) eine fast bis zu den Rillen (15) reichende Aufnahmevertiefung (120) aufweist, die mit dem elastischen und rutschhemmenden Belag (14) planeben aufgefüllt ist.

9. Anordnung nach Anspruch 8, **dadurch gekennzeichnet, daß** die Aufnahmevertiefung (120) der Betonplatte (11) zwischen benachbarten Rillen (15) in Querschnittsrichtung zu den Rillen (15) rechteckigen oder halbelliptischen Querschnitt aufweist.

10. Anordnung nach Anspruch 8 oder 9, **dadurch gekennzeichnet, daß** ein aus Beton gebildeter Randbereich (130) zu den Rillen (15) an der Oberfläche (10) beidseits der etwa 3 cm breiten Rille (15) eine Breite von jeweils 2 cm und die Absenkung der Betonoberfläche (Aufnahmevertiefung (120)) durchschnittlich etwa 2 cm beträgt.

11. Anordnung nach Anspruch 10, **dadurch gekennzeichnet, daß** der aus Beton bestehende Rillenrandbereich (130) mit einem Verstärkungselement, bevorzugt einem Armierungsstahl (26), verstärkt ist.

12. Anordnung nach einem der vorangehenden Ansprüche, **dadurch gekennzeichnet, daß** der elastische Belag (14) aus einer bitumenartigen Masse, bevorzugt Asphalt, oder einem Elastomer gebildet ist.

13. Anordnung nach einem der vorangehenden Ansprüche, **dadurch gekennzeichnet, daß** die Rillen (15) parallel in Längsrichtung des Rillenflurs (1) angeordnet sind und einen Mittenabstand zueinander von 16 - 50 cm, bevorzugt 25 cm, aufweisen.

14. Anordnung nach einem der vorangehenden Ansprüche, **dadurch gekennzeichnet, daß** an wenigstens einem Kopfende (16) des Rillenflurs (1) eine Jauchegrube (3) mit Spaltenboden (31) zur Aufnahme der in den Rillen (15) gesammelten Flüssigkeiten angeordnet ist.

15. Anordnung nach einem der vorangehenden Ansprüche, **dadurch gekennzeichnet, daß** auf dem Rillenflur (1) ein Ausmistsystem (200) mit in Längsrichtung der Rillen (15) bewegbaren Schieber (220) angeordnet ist.

16. Anordnung nach Anspruch 15, **dadurch gekennzeichnet, daß** der Schieber (220) zinkenförmige, der Rillenanordnung entsprechende Ansätze (221) aufweist, die beim Betrieb in die Rillen (15) eingreifen.

17. Anordnung nach einem der vorangehenden Ansprüche, **dadurch gekennzeichnet, daß** der Rillenflur (1) aus Betonfertigteilplatten (11) gebildet ist.

18. Anordnung nach Anpruch 17, **dadurch gekennzeichnet, daß** die Betonfertigteilplatten (11) als Austauschauflage für herkömmliche Güllegruben mit Spaltenboden ausgebildet sind, wobei Durchgangslöcher (135) in den Rillen (15) zur Plattenunterseite als Ablauf für die Jauche vorgesehen sind.

19. Betonfertigteilplatte zum Aufbau einer Anordnung gemäß einem der Ansprüche 1 bis 18, **dadurch gekennzeichnet, daß** die Betonfertigteilplatte (11) der Flurbreite entspricht und in Längsrichtung zur paßgenauen Ausrichtung der aneinanderzufügenden Platten Passungselemente (17, 18) aufweist.

20. Betonfertigteilplatte gemäß Anspruch 19, **dadurch gekennzeichnet, daß** die Passungselemente (17, 18) aus an einer Stirnseite der Platte angeordneten Vorsprüngen (17) und an der anderen Stirnseite der Platte angeordneten zugeordneten Aufnahmen (18) bestehen.

21. Betonfertigteilplatte nach einem der Ansprüche 7 bis 8, **dadurch gekennzeichnet, daß** in Flurbreite im wesentlichen gleich beabstandete Rillen (25) vorgesehen sind, wobei in der Mitte ein breiteres Betonmittelteil (19) und am Rand jeweils ein Seitenstreifen (20) ohne einen elastischen Belag (14, 24) vorgesehen sind.

22. Tierhaltungsverfahren **dadurch gekennzeichnet, daß** in einer Anordnung nach einem der vorangehenden Ansprüche ein organisches oder mineralisches Bindemittel im Boxenlaufstall eingestreut wird und beim Ausmisten eine Trennung von gebundenem Mist und Jauche erfolgt.

23. Tierhaltungsverfahren nach Anspruch 14, **dadurch gekennzeichnet, daß** Stroh, geschreddertes Stroh, Holzspäne und/oder Sand im Boxenlaufstall als Bindemittel eingestreut werden.

## Claims

1. An arrangement for a cowshed with loose housing stalls, or the like, for keeping livestock, in particular cattle, having a grooved passage (1) in the form of a concrete slab (11) and having a passage surface (10), **characterised in that** the passage surface (10) is provided, between adjacent grooves (15) and closely approaching the grooves, with a resilient non-slip covering (14) in such a way that the latter ends before the wall of the groove.

2. An arrangement according to Claim 1, **characterised in that** the grooves (15) in the passage (1) are held open by stable U-shaped profiles (13) and the passage surface is provided with the resilient non-slip covering (14) between adjacent U-shaped profiles (13).

3. An arrangement according to Claim 2, **characterised in that** the U-shaped profiles (13) are formed from fracture-resistant hard plastics material or metal, preferably steel.

4. An arrangement according to Claim 2 or 3, **characterised in that** the concrete slab (11) has on its upper side receiving channels (12) for the U-shaped profiles (13).

5. An arrangement according to Claim 2, 3 or 4, **characterised in that** the U-shaped profile (13) is immersed in the concrete slab (11) to the extent of 1/3 to 5/6 of the height of the limbs and the rest of the vertical extent is filled in between adjacent U-shaped profiles (13) by the covering (14).

6. An arrangement according to Claim 2, 3, 4 or 5, **characterised in that** the U-shaped profile (13) has limbs (132) having a height of 2 - 20 cm, preferably approximately 10 cm, and spans a groove width of 3 - 4 cm, preferably 3.5 cm, by means of the base (131).

7. An arrangement according to one of Claims 2 to 6, **characterised in that** the parallel U-shaped profiles (13) are connected at their base (131) at the desired spacing to a connection element (134), preferably by means of a flat iron bar welded underneath.

8. An arrangement according to Claim 1, **characterised in that** the grooves (15) are held fully open by the concrete of the concrete slab (11), with the concrete slab (11) having between adjacent grooves (15) a receiving depression (120) which reaches almost to the grooves (15) and is filled with the resilient non-slip covering (14) such that the planes are level.

9. An arrangement according to Claim 8, **characterised in that** the receiving depression (120) in the concrete slab (11) has a rectangular or semi-elliptical cross-section between adjacent grooves (15), in the direction of cross-section of the grooves (15).

10. An arrangement according to Claim 8 or 9, **characterised in that** an edge region (130), formed from concrete, to the grooves (15) has a width of 2 cm in each case at the surface (10) on either side of the groove (15), which is approximately 3 cm wide, and has on average a depth in the concrete surface (receiving depression (120)) of approximately 2 cm.

11. An arrangement according to Claim 10, **characterised in that** the groove edge region (130), made of concrete, is reinforced by a reinforcing element, preferably a reinforcing steel (26).

12. An arrangement according to one of the preceding claims, **characterised in that** the resilient covering (14) is formed from a bitumen-like mass, preferably asphalt, or an elastomer.

13. An arrangement according to one of the preceding claims, **characterised in that** the grooves (15) are arranged parallel in the longitudinal direction of the grooved passage (1) and have an average spacing from one another of 16 - 50 cm, preferably 25 cm.

14. An arrangement according to one of the preceding claims, **characterised in that** a liquid manure cistern (3) with a slotted base (31) for receiving liquids which collect in the grooves (15) is arranged at at least one top end (16) of the grooved passage (1).

15. An arrangement according to one of the preceding claims, **characterised in that** a mucking-out system (200) having a scraper (220) which may be moved in the longitudinal direction of the grooves (15) is arranged on the grooved passage (1).

16. An arrangement according to Claim 15, **characterised in that** the scraper (220) has tine-like attachments (221) which correspond to the arrangement of the grooves and during operation engage in the grooves (15).

17. An arrangement according to one of the preceding claims, **characterised in that** the grooved passage (1) is formed from precast concrete slabs (11).

18. An arrangement according to Claim 17, **characterised in that** the precast concrete slabs (11) are in the form of a replaceable support surface for conventional liquid manure cisterns with a slotted base, with through holes (135) provided in the grooves (15) to the underside of the slab as a means of run-off for the liquid manure.

19. A precast concrete slab for the construction of an arrangement according to one of Claims 1 to 18, **characterised in that** the precast concrete slab (11) corresponds to the width of the passage and has, in the longitudinal direction, fitting elements (17, 18) for the precisely fitting alignment of the slabs which are to be joined to one another.

20. A precast concrete slab according to Claim 19, **characterised in that** the fitting elements (17, 18) comprise projections (17) arranged at one end face of the slab and associated receivers (18) arranged at the other end face of the slab.

21. A precast concrete slab according to either of Claims 7 or 8 [*sic*, *recte* 19 or 20], **characterised in that** grooves (25) which are at substantially the same spacing are provided over the width of the passage, with a wider concrete central part (19) provided in the centre and a side strip (20) provided at each edge without a resilient covering (14, 24).

22. A method of keeping livestock, **characterised in that**, in an arrangement according to one of the preceding claims, an organic or mineral binder is strewn in the loose housing stall and, on mucking out, the bound muck and the liquid manure are separated.

23. A method of keeping livestock according to Claim 14 [*sic*, *recte* 22], **characterised in that** straw, shredded straw, woodchips and/or sand are strewn in the loose housing stall as the binder.

## Revendications

1. Dispositif pour stabulation libre à logettes ou installations similaires pour l'élevage de bétail, notamment de bovins, avec un couloir à rainures (1) formé par une plaque en béton (11) présentant une surface de couloir (10), **caractérisé en ce que** la surface de couloir (10) est munie entre des rainures contiguës (15) d'un revêtement élastique et antidérapant (14) s'étendant jusqu'à proximité des rainures, de sorte qu'il finisse avant le bord des rainures.

2. Dispositif selon la revendication 1, **caractérisé en ce que** les rainures (15) dans le couloir (1) sont formées par des profilés en U solides (13) et la surface de couloir est munie entre des profilés en U (13) contigus d'un revêtement (14) élastique et antidérapant.

3. Dispositif selon la revendication 2, **caractérisé en ce que** le profilé en U (13) est fabriqué en matière plastique dure incassable ou en métal, de préférence en acier.

4. Dispositif selon la revendication 2 ou 3, **caractérisé en ce que** la plaque en béton (11) est munie sur sa face supérieure de rainures de réception (12) pour les profilés en U (13).

5. Dispositif selon la revendication 2, 3 ou 4, **caractérisé en ce que** le profilé en U (13) pénètre de 1/3 à 5/6 de la hauteur des branches dans la plaque en béton (11) et le reste de la hauteur entre deux profilés en U (13) contigus est rempli par le revêtement (13).

6. Dispositif selon la revendication 2, 3, 4 ou 5, **caractérisé en ce que** le profilé en U (13) a des branches (132) d'une hauteur de 2-20 cm, de préférence d'environ 10 cm, et forme avec la base (131) une largeur de rainure de 3-4 cm, de préférence de 3,5 cm.

7. Dispositif selon l'une des revendications 2 à 6, **caractérisé en ce que** les profilés en U (13) disposés parallèlement sont reliés par leur base (131) à un élément de liaison (134) à une distance souhaitée, de préférence par un fer plat soudé par en dessous.

8. Dispositif selon la revendication 1, **caractérisé en ce que** les rainures (15) sont entièrement formées dans le béton de la plaque en béton (11), ladite plaque en béton (11) étant munie entre deux rainures contiguës (15) d'un évidement de réception (120) s'étendant pratiquement jusqu'aux rainures (15) qui est rempli de façon plane par le revêtement (15) élastique et antidérapant.

9. Dispositif selon la revendication 8, **caractérisé en ce qu'**entre des rainures voisines (15), l'évidement de réception (120) de la plaque en béton (11) présente en coupe perpendiculaire aux rainures (15) une section transversale rectangulaire ou semi-elliptique.

10. Dispositif selon la revendication 8 ou 9, **caractérisé en ce qu'**une zone de bord (130) par rapport aux rainures (15) formée en béton à la surface (10) des deux côtés de la rainure (15) ayant une largeur d'environ 3 cm présente chacune une largeur d'environ 2 cm et l'affaissement de la surface de béton (évidement de réception (120)) s'élève en moyenne à environ 2 cm.

11. Dispositif selon la revendication 10, **caractérisé en ce que** la zone de bord de rainure (130) réalisée en béton est renforcée avec un élément de renfort, de préférence un acier à béton armé.

12. Dispositif selon l'une des revendications précédentes, **caractérisé en ce que** le revêtement élastique (14) est formé d'une masse bitumineuse, de préférence de l'asphalte, ou d'un élastomère.

13. Dispositif selon l'une des revendications précédentes, **caractérisé en ce que** les rainures (15) sont disposées parallèles dans la direction longitudinale du couloir à rainures (1) et présentent entre elles une distance de centre à centre de 16 à 50 cm, de préférence de 25 cm.

14. Dispositif selon l'une des revendications précédentes, **caractérisé en ce qu'**une fosse à purin (3) avec caillebotis (31) est disposée à au moins une des extrémités du couloir à rainures (1) pour recevoir les liquides collectés dans les rainures (15).

15. Dispositif selon l'une des revendications précédentes, **caractérisé en ce qu'**un dispositif d'enlèvement du fumier (200) avec des pousseurs (220) pouvant être déplacés en direction longitudinale du couloir à rainures (1), est disposé sur le couloir à rainures (1).

16. Dispositif selon la revendication 15, **caractérisé en ce que** le poussoir (220) est muni de saillies (221) en dents de peigne correspondant à la disposition des rainures qui s'engagent dans les rainures (15) au moment de l'utilisation.

17. Dispositif selon l'une des revendications précédentes, **caractérisé en ce que** le couloir à rainures (1) est formé à partir de plaques de béton préfabriquées (11).

18. Dispositif selon la revendication 17, **caractérisé en ce que** les plaques en béton préfabriqué (11) sont formées comme des supports échangeables pour fosses à lisier courantes avec caillebotis, les orifices (135) dans les rainures (15) menant vers la face inférieure de la plaque sont prévus pour l'écoulement du purin.

19. Plaque préfabriquée en béton pour la construction d'un dispositif selon l'une des revendications 1 à 18, **caractérisée en ce que** la plaque préfabriquée en béton (11) correspond à la largeur du couloir et qu'elle est munie d'éléments d'ajustement (17, 18) en direction longitudinale pour l'alignement exact des plaques aboutées les unes aux autres.

20. Plaque préfabriquée en béton selon la revendication 19, **caractérisée en ce que** les éléments d'ajustement (17, 18) sont constitués d'une saillie (17) disposée sur une face frontale de la plaque et d'un évidement (18) correspondant disposé sur l'autre face frontale de la plaque.

21. Plaque préfabriquée en béton selon l'une des revendications 19 à 20, **caractérisée en ce que** des rainures (25) sont prévues dans la largeur du couloir sensiblement à égale distance, une partie centrale en béton (19) située au milieu et une bande de bordure (20) sur chaque bord étant prévues sans revêtement élastique (14, 24).

22. Procédé d'élevage d'animaux, **caractérisé en ce que** dans un dispositif selon l'une des revendications précédentes, un liant organique ou minéral est répandu dans la stabulation libre à logettes et qu'une séparation du fumier lié et du purin est réalisée lors de l'enlèvement du fumier.

23. Procédé d'élevage d'animaux selon la revendication 22, **caractérisé en ce que** de la paille, de la paille coupée, des copeaux de bois et/ou du sable sont répandus dans la stabulation libre à logettes comme liant.
